# FASCICULE DE BREVET EUROPEEN

(11) **EP 0 689 310 B1**
(45) Date de publication et mention de la délivrance du brevet: **18.02.2004**
(21) Numéro de dépôt: 95401455.1
(22) Date de dépôt: 20.06.1995
(51) Int. Cl.: H04J 13/00, H04J 3/24

(54) **Procédé, émetteur et récepteur pour la transmission d'informations par paquets**
Verfahren, Sender und Empfänger zur Nachrichtenübertragung durch Packete
Method, transmitter and receiver for transmitting information by packets

(30) Priorité: 24.06.1994 FR 9407792
(43) Date de publication de la demande: 27.12.1995
(73) Titulaire: Thales, 75008 Paris (FR)
(72) Inventeur: Ramel, Louis, F-92402 Courbevoie Cédex (FR)
(74) Mandataire: Dudouit, Isabelle

(56) Documents cités:
- EP-A- 0 486 834
- EP-A- 0 655 845
- WO-A-94/10774
- US-A- 5 022 046
- IEEE INTERNATIONAL SYMPOSIUM ON SPREAD SPECTRUM TECHNIQUES AND APPLICATIONS, 24 - 26 Septembre 1990 LONDON, GB, pages 47-52, I. VAJDA 'ON RANDOM CODE-HOPPING DS/SSMA SYSTEM'

## Description

La présente invention concerne la transmission d'informations par paquets, sur fréquence porteuse, avec étalement-désétalement des données, entre plusieurs émetteurs et au moins un récepteur d'un même réseau de communication.

Quand plusieurs émetteurs ont à émettre des paquets en direction d'un ou plusieurs récepteurs, soit par voie hertzienne soit en utilisant des liaisons câblées dont certaines au moins peuvent acheminer des paquets ne provenant pas d'un seul émetteur, il existe un risque de recouvrement c'est-à-dire un risque d'avoir deux paquets qui, au moins pour une partie de leurs durées respectives, atteignent simultanément un récepteur et du fait de caractéristiques similaires ne peuvent être séparés l'un de l'autre ; un tel recouvrement, plus ou moins complet, est généralement appelé collision ou interférence entre paquets.

Pour réduire les risques de collision, différentes techniques sont connues qui consistent à rendre les paquets orthogonaux entre eux, c'est à-dire à leur donner, à l'émission, des caractéristiques suffisamment différentes d'un émetteur à l'autre pour que les paquets puissent être séparés à la réception. Ainsi il est connu de faire que les différents émetteurs émettent tous sur des fréquences porteuses différentes ; cette technique est appelée "Frequency Division Multiple Access" ou FDMA, dans la littérature anglo-saxonne, ou étalement de spectre comme proposé par le brevet US 5,022,046; sa mise en oeuvre n'est pas toujours possible pour des questions de largeur de bande de fréquences disponible, voire des questions de prix de revient des récepteurs. Il est également connu d'émettre les paquets selon des codes d'étalement différents d'un émetteur à l'autre ; cette technique est appelée "Code Division Multiple Access" ou CDMA, dans la littérature anglo-saxonne. Une autre manière de réduire les risques de collisions est d'émettre en temps partagé avec les différents émetteurs ; cette technique est appelée "Time Division Multiple Access" ou TDMA, dans la littérature anglo-saxonne, elle nécessite que les émetteurs et le ou les récepteurs travaillent tous en synchronisme et n'est donc pas commode d'emploi. Ces trois techniques peuvent d'ailleurs être combinées pour rendre les paquets orthogonaux entre eux.

Préalablement à la réception de plusieurs émetteurs, un récepteur doit connaître les caractéristiques, dites étalements, propres à chacun des émetteurs, c'est-à-dire les caractéristiques qui correspondent aux fréquences porteuses et aux codes employés dans chaque émetteur et aux intervalles de temps alloués à chaque émetteur ; il en résulte que, pour avoir une bonne orthogonalité entre les paquets et un débit élevé de paquets, les protocoles de mise en oeuvre, tant à l'émission qu'à la réception des paquets, sont complexes.

Le brevet européen EP 0 655 845 (dont la demande a été publié le 31 mais 1995) propose, comme alternative, un procédé anti-collision émettant des paquets constitués par un segment préliminaire et d'une séquence de segments de données, à chacun de ces segments correspondant un étalement donné, et les étalements de deux segments étant orthogonaux. Les paquets ainsi obtenus sont de longueur constante.

La présente invention a pour but d'éviter ou, pour le moins, de réduire les inconvénients précités.

Ceci est obtenu, en particulier, en utilisant des paquets ayant une configuration particulière.

Selon l'invention il est propose un procédé de transmission de données par paquets, sur fréquence porteuse, avec étalement-désétalement des données entre plusieurs émetteurs et au moins un récepteur, caractérisé :
■ en ce qu'il consiste à émettre des paquets de bits constitués :
   - d'un en-tête à une fréquence prédéterminée,
   - suivi de n sous-paquets, où n est un nombre réel supérieur à 1, fonction du paquet considéré, tous les sous-paquets ayant la même longueur, le même débit de transmission et la même loi d'étalement qu'un sous-paquet standard prédéterminé, formé de segments orthogonaux entre eux,
■ en ce qu'il consiste à émettre les sous-paquets d'un paquet en synchronisme avec l'émission de l'en-tête du paquet et avec une périodicité au moins égale à la durée du sous-paquet standard et
■ en ce qu'il consiste, à la réception :
   - à avoir en mémoire la loi d'étalement du sous-paquet standard,
   - à repérer les paquets en surveillant la seule réception des en-têtes,
   - les sous-paquets d'un paquet repéré par son en-tête étant alors traités en fonction de la structure du sous-paquet standard pour en désétaler les données.

La présente invention sera mieux comprise et d'autres caractéristiques apparaîtront à l'aide de la description ci-après et des figures s'y rapportant qui représentent :
les figures 1 à 4, des diagrammes destinés à illustrer des transmissions de paquets par le procédé selon l'invention,
les figures 5 et 6, respectivement les schémas d'un émetteur et d'un récepteur pour la mise en oeuvre du procédé selon l'invention.

Dans la description et dans les revendications un certain nombre de termes sont employés, dont la signification est rappelée ci-après; certaines de ces définitions seront reprises plus loin, au moins partiellement, là où cela sera jugé utile pour faciliter la compréhension.

Le terme en-tête représente une suite de bits tous émis sur une même fréquence porteuse connue de tous les émetteurs et récepteurs du réseau et, dans certaines applications, cette fréquence peut varier avec le temps ; parmi les bits d'un en-tête les premiers ont une fonction de synchronisation, les suivants permettent la gestion des échanges d'informations.

Le terme sous-paquet standard représente ici une suite de bits de données ayant une longueur fixe, un débit de transmission fixe, donc une durée fixe, et ayant de plus une loi d'étalement donnée ; et, selon cette loi, les bits du sous-paquet standard sont répartis en segments successifs, de préférence tous de même durée, ayant chacun leur étalement propre et les étalements de deux segments, quels qu'ils soient, sont orthogonaux entre eux c'est-à-dire qu'il n'y aurait pas de collision entre ces segments s'ils étaient émis au même instant respectivement par deux émetteurs du réseau. Il est à noter que l'en-tête possède, en plus de ses caractéristiques propres, les mêmes caractéristiques que les segments des sous-paquets et que, de préférence, la durée de l'en-tête et des segments des sous-paquets sont les mêmes.

Selon le procédé les paquets sont constitués chacun d'un en-tête suivi d'un nombre n, où n est un réel supérieur à 1, de sous-paquets émis en synchronisme avec l'en-tête du paquet et à intervalles de durée constante ; de plus les champs de synchronisation que constituent les en-têtes ont tous la même constitution et tous les sous-paquets émis dans le réseau ont la même constitution qu'un paquet standard prédéterminé. Ainsi, connaissant la fréquence porteuse de l'en-tête de tout paquet émis, quel que soit le poste émetteur, un poste récepteur repérera l'arrivée d'un paquet en n'ayant à surveiller que l'arrivée des en-têtes ; quand un tel repérage a lieu, il suffit au poste récepteur de se synchroniser de manière classique sur l'en-tête repéré pour, tenant compte des étalements des sous-paquets, adapter ses caractéristiques de réception à ces étalements afin de recevoir successivement tous les sous-paquets constituant le paquet. Bien entendu les risques de collision subsistent mais ils sont notablement réduits par rapport à ce qu'ils étaient avec les procédés classiques; en effet il n'y a pas collision sur un paquet s'il n'y a pas collision sur l'en-tête ou sur le premier sous-paquet comme cela va être montré dans ce qui suit. Par une écoute préalable à toute émission de paquet, il est possible d'éviter que l'en-tête ou le premier sous-paquet d'un nouveau paquet entrent en collision avec respectivement un en-tête et un sous- paquet en cours d'émission ; de cette façon il n'y aura aucune collision, sur la totalité du nouveau paquet, avec les paquets déjà en cours d'émission au moment où l'en-tête du nouveau paquet commencera à être émis ; mais cette écoute préalable, du fait en particulier des moyens d'écoute et de contrôle qu'elle nécessite, est onéreuse.

De ce qui précède il ressort que les risques de collision, pour une même quantité d'information échangée, seront d'autant plus réduits que les paquets pour transmettre cette information seront plus longs, c'est-à-dire seront moins nombreux et, en corollaire, comporteront chacun le plus de sous-paquets.

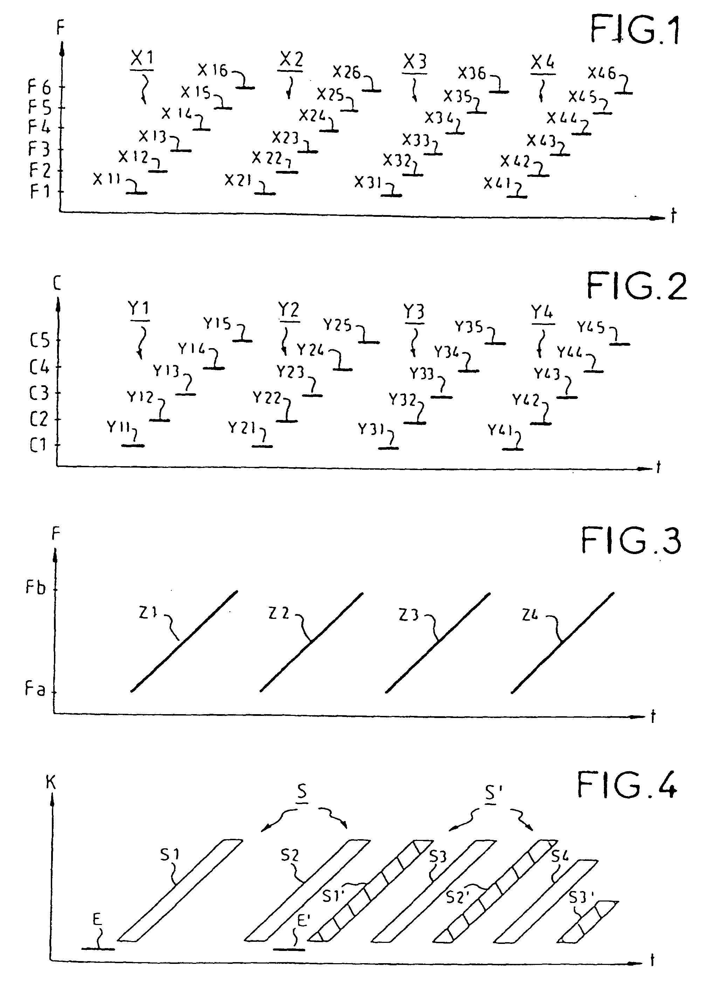

Quelques exemples de sous-paquets tels qu'ils viennent d'être définis, sont décrits à l'aide des figures 1 à 4 qui sont des diagrammes représentatifs de l'étalement de sous-paquets en fonction du temps.

Les figures 1 à 3 montrent chacune une succession de quatre sous-paquets : X1 à X4 pour la figure 1, Y1 à Y4 pour la figure 2, Z1 à Z4 pour la figure 3. Dans chacun des cas les quatre sous-paquets sont constitués sur le modèle d'un sous-paquet standard. La structure du sous-paquet standart est la suivant : une suite de données ayant une longueur fixe, un débit de transmission fixe, donc une durée fixe et de plus, au sous-paquet standard est appliquée une loi d'étalement donnée. Toujours dans les trois cas représentés les sous-paquets sont émis à fréquence fixe et si la période d'émission des paquets ne peut, bien entendu, pas être inférieure à la durée d'un sous-paquet, donc du sous-paquet standard, elle peut lui être supérieure.

Dans le cas de la figure 1 la loi d'étalement est du type à saut de fréquence ; elle consiste à diviser le sous-paquet en six segments, tels que X11 à X16 pour le sous-paquet X1, et à émettre les six segments respectivement selon six fréquences différentes F1 à F6.

Dans le cas de la figure 2 la loi d'étalement est du type codage ; elle consiste à diviser le sous-paquet en cinq segments, tels que Y11 à Y15 pour le sous-paquet Y1, et à émettre les données contenues dans les cinq segments en les codant respectivement selon cinq codes orthogonaux entre eux, C1 à C5.

Dans le cas de la figure 3 la loi d'étalement est du type à rampe de fréquence ; elle consiste à émettre les données contenues dans un sous-paquet sur une fréquence porteuse variant de la valeur Fa à la valeur Fb dans un temps donné ; dans ce cas le sous-paquet peut être considéré comme étant constitué, lui-aussi, de segments mais de segments réduits à un seul bit.

D'autres types de sous-paquets peuvent être utilisés, par exemple en associant un code d'étalement à chacun des paliers de fréquence du sous-paquet standard qui sert de modèle aux sous-paquets selon la figure 1 ; les codes seront choisis orthogonaux entre eux, au moins pour deux segments successifs, quels qu'ils soient, du sous-paquet standard.

Il est à remarquer que lorsque deux émetteurs d'un réseau émettent des sous-paquets ayant une même configuration, par exemple selon l'une des figures 1 à 3, il n'y aura collision entre leurs sous-paquets que s'il y a recouvrement, partiel ou total, entre les segments des sous-paquets ayant le même étalement.

La figure 4 montre, comment à partir des sous-paquets selon les figures 1, 2 ou 3 constituer des paquets S, S'. Le procédé peut être mis en oeuvre avec n'importe quelle loi d'étalement, K, par exemple une des lois décrites à l'aide des figures 1 à 3 ou une combinaison de ces lois. Sur la figure 4 les sous-paquets sont représentés par des parallélogrammes. Pour les explications qui vont suivre, il est seulement nécessaire de se rappeler que les sous-paquets sont formés de segments, qu'à chaque segment correspond un étalement et que les étalements de deux segments d'un même sous-paquet sont orthogonaux entre eux.

Le paquet S comporte un en-tête E suivi de sous-paquets, S1 à S4; il est à noter que le dernier sous-paquet, S4, a une durée inférieure aux autres ; cela est dû au fait que, dans le cas considéré, l'ensemble des données à transmettre ne nécessitait pas un nombre entier de sous-paquets. Dans le cas du paquet S le nombre de sous-paquets est de 3,8; quant au paquet S' il comporte lui aussi un en-tête E' suivi de 2,4 sous-paquets, S1' à S3'.

Tous les sous-paquets S1 à S4 et S1' à S3' ont la même structure qu'un sous-paquet standard prédéterminé et se suivent avec la même périodicité à l'intérieur des paquets. Dans ces conditions et compte tenu de ce que les en-têtes sont tous émis à une même fréquence et ne sont pas orthogonaux entre eux, pour qu'il n'y ait pas collision entre deux paquets S, S' émis par deux émetteurs d'un réseau de communication, il suffit que l'en-tête E' du second paquet S' ne soit pas en recouvrement, même partiel, avec l'en-tête E du premier paquet et que le premier sous-paquet S1' du second paquet S' ne soit pas en collision avec un sous-paquet, quel qu'il soit, du premier paquet ; ce qui revient à dire que si, ni l'entête ni le premier sous-paquet n'entrent en collision, les deux paquets ne pourront rentrer en collision quelles que soient leurs longueurs respectives, du moins dans le mesure où les fréquences d'émission des sous-paquets restent parfaitement identiques dans les deux émetteurs d'où sont émis les deux paquets considérés.

En associant, comme cela a été indiqué précédemment, à chaque émetteur des moyens de réception pour surveiller les émissions d'en-têtes et de sous-paquets dans le réseau, il est possible d'éviter totalement les collisions entre paquets en recherchant les intervalles de temps disponibles à cet effet, mais il s'agit d'une amélioration coûteuse. Etant donné que la technique d'écoute préalable est une technique connue et qu'elle n'apporte rien à la compréhension du procédé selon l'invention, il n'en sera plus question dans ce qui suit.

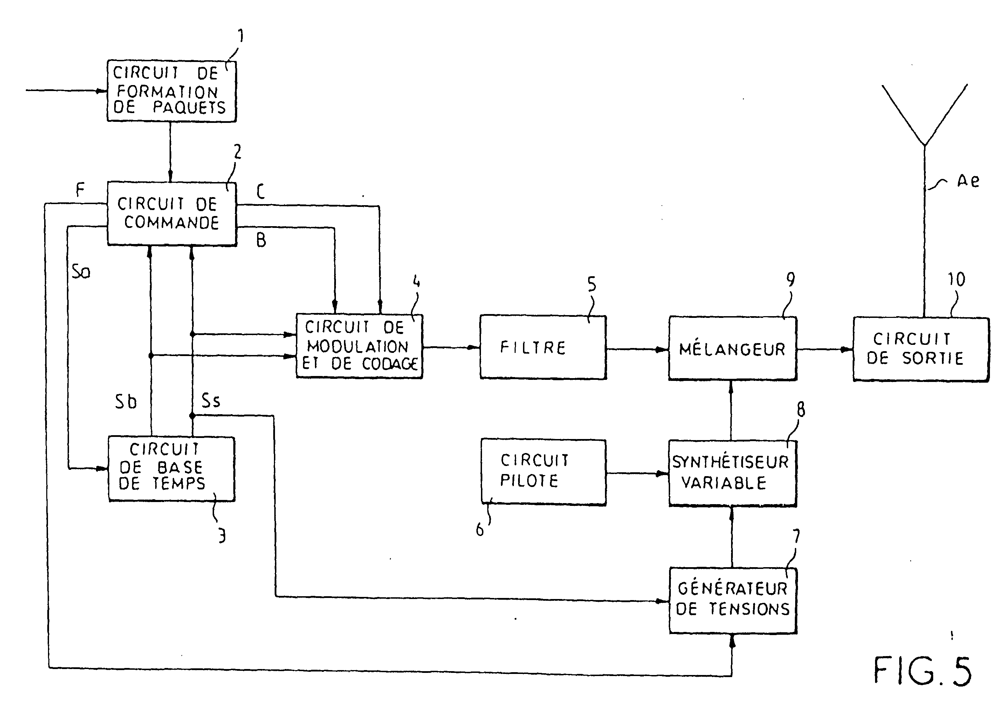

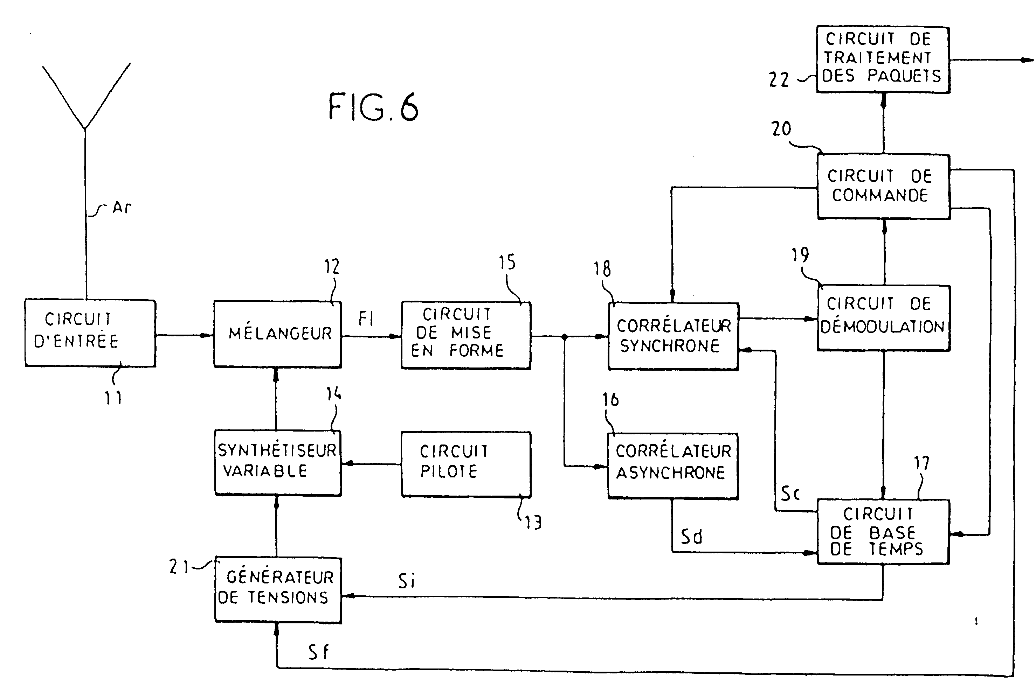

Les exemples de réalisation d'un émetteur et d'un récepteur qui vont être décrits à l'aide des figures 5 et 6, concernent des matériels pour la mise en oeuvre du procédé, qui permettent d'utiliser des changements de fréquences et/ou de codes d'étalement lors de la transmission d'un paquet. Comme l'originalité du procédé ne réside pas dans le fait bien connu de rendre des segments orthogonaux mais réside, en particulier comme il a été vu plus avant, dans la transmission de paquets faits de sous-paquets ayant tous une même structure, les émetteurs selon la figure 5 et les récepteurs selon la figure 6 sont très voisins d'émetteurs et de récepteurs connus, dont ils se distinguent surtout au niveau de leurs protocoles de fonctionnement tels qu'ils ont été décrits dans ce qui précède ; en fait, connaissant ces protocoles, la réalisation d'un émetteur et d'un récepteur capables de les appliquer ne pose aucun problème à l'homme du métier qui, au contraire, y trouvera certaines facilités. Il a donc été possible d'éliminer, dans ce qui suit tout ce qui relevait de la technologie courante et ne contribuait pas à la compréhension des exemples de mise en oeuvre du procédé ; les dessins en sont plus claires et l'exposé s'en trouve simplifié.

La figure 5 est un schéma électrique relatif à un émetteur pour la mise en oeuvre du procédé. Tout d'abord ce schéma sera commenté dans le cas où l'émetteur fonctionne en sauts de fréquence et avec codes d'étalement ; puis il sera indiqué comment les commentaires doivent être modifiés pour le cas où l'émetteur fonctionne en rampe de fréquences.

Les bits de données à transmettre, D, sont fournis à un circuit de formation de paquets, 1, qui, en fonction des bits qu'il reçoit, délivre des paquets à un circuit de commande 2. Le rôle du circuit 2 est d'introduire dans le paquet des informations qui, selon les besoins, peuvent être, par exemple l'adresse de l'expéditeur ou l'adresse du ou des destinataires. Son rôle est également d'organiser les opérations de subdivision des paquets en sous-paquets, d'étalement des sous-paquets par codes d'étalement et par sauts de fréquence. Un circuit de base de temps, 3, délivre les signaux de synchronisation nécessaires à ces opérations d'étalement ; le circuit 3 est déclenché par un signal Sa fourni par le circuit 2 à chaque fois qu'il désire commencer les opérations d'étalement d'un sous-paquet.

Pour organiser les opérations d'étalement le circuit de commande 2 dispose de la liste des fréquences et des codes à utiliser ainsi que des lois d'application de ces fréquences et de ces codes, c'est-à-dire qu'il a en mémoire les caractéristiques du sous-paquet standard dont il a été question dans ce qui précède ; il peut ainsi organiser les opérations de manière que, comme il a été vu plus avant, les caractéristiques d'étalement des sous-paquets qui vont être transmis correspondent à celles du sous-paquet standard.

Le circuit de commande 2 reçoit du circuit de base de temps 3 des impulsions de synchronisation des bits, Sb, et de synchronisation des débuts de segments, Ss. Il peut ainsi fournir des groupes de bits, B, correspondant chacun aux bits d'un segment à émettre et, avec chaque groupe, un signal C et un signal F représentatifs respectivement du code d'étalement et de la fréquence à employer pour l'émission du groupe considéré.

Un circuit de modulation et de codage, 4, reçoit les signaux B, C et les signaux de synchronisation Sb, Ss ; il fournit un signal modulé formé de segments auxquels sont appliqués les codages déterminés par le circuit de commande 2. Après filtrage dans un filtre 5 ces segments, auxquels sont appliqués des codes d'étalement orthogonaux, arrivent sur la première entrée d'un mélangeur 9 qui reçoit, sur une seconde entrée, un signal à fréquence porteuse dont la valeur est déterminée, pour chaque segment, par le signal F correspondant au segment considéré. Le signal à fréquence porteuse qui arrive sur la seconde entrée du mélangeur 9 est élaboré par un synthétiseur variable 8 qui reçoit un signal à fréquence fixe fourni par un circuit pilote 6 et un signal de commande de sa fréquence de sortie, constitué par une tension fournie par un générateur de tensions 7 ; pour fournir cette tension le générateur 7, qui est synchronisé par les signaux Ss de synchronisation des débuts de segments, reçoit le signal F dont la valeur indique la tension à délivrer par le générateur 7 et donc la fréquence à délivrer par le synthétiseur 8.

Le mélangeur 9, en fonction des signaux qu'il reçoit sur ses deux entrées, délivre sur sa sortie un en-tête et des sous-paquets formés de segments codés selon des codages orthogonaux entre eux, et ces segments sont, pour un même sous-paquet, tous à des-fréquences différentes ; de plus l'en-tête et les sous-paquets d'un même paquet sont synchronisés et les sous-paquets sont émis à fréquence constante.

Un circuit de sortie 10, comportant un filtre large bande en entrée et un amplificateur de puissance en sortie, reçoit le signal élaboré par le mélangeur 9 et fournit à une antenne Ae les paquets constitués d'un en-tête suivi de sous-paquets faits d'une séquence de segments avec saut de fréquence entre les segments et codage orthogonal entre tous les segments d'un même sous-paquet.

Pour recevoir un tel paquet, il est proposé un récepteur selon la figure 6. Ce récepteur comporte une antenne de réception, Ar, reliée à un circuit d'entrée 11 comportant, en série, un préamplificateur et un filtre à large bande. Le circuit 11 est relié à la première entrée d'un mélangeur 12 qui reçoit sur une seconde entrée le signal de sortie d'un synthétiseur variable 14 ; ce synthétiseur reçoit un signal à fréquence fixe d'un circuit pilote 13. Le signal à fréquence intermédiaire délivré par le mélangeur 12 est mis en forme dans un circuit de mise en forme 15 qui comporte un filtre suivi d'un amplificateur avec commande automatique de gain.

Le mélangeur 12 fournit, grâce au synthétiseur 14 dont le fonctionnement sera vu plus loin, un signal à fréquence intermédiaire constante, modulé par les informations contenues dans les paquets émis par l'émetteur selon la figure 5 ; après passage dans le circuit 15 ce signal est appliqué à l'entrée de deux corrélateurs 16, 18. Le corrélateur 16 est un corrélateur asynchrone qui a pour rôle de rechercher dans son signal d'entrée les en-têtes dont il a été vu qu'ils constituaient des champs de synchronisation tous de même composition, quel que soit le paquet.

Quand un en-tête est trouvé par le corrélateur 16, un signal de début de paquet, Sd, est délivré par le corrélateur 16 à un circuit de base de temps 17 qui fournit un signal de synchronisation, Sc, au corrélateur synchrone 18. La fréquence du signal Sc, quand ce signal est déclenché par le signal Sd, correspond à la valeur théorique de la fréquence intermédiaire. Le corrélateur 18 est relié à l'entrée d'un circuit de démodulation, 19, lui-même relié à l'entrée d'un circuit de commande 20 et le circuit 20 a une sortie reliée à une entrée de commande de codes d'étalement du corrélateur synchrone 18. Les circuits 18, 19, 20 forment donc une boucle.

Le circuit de commande 20 est le pendant du circuit de commande 2 de l'émetteur selon la figure 5. Son rôle principal est d'organiser les opérations de désétalement des paquets reçus ; pour cela il dispose de la liste des fréquences et des codes utilisés ainsi que des lois d'application de ces fréquences et de ces codes c'est-à-dire de la loi d'étalement du sous-paquet standard et de la fréquence d'émission des sous-paquets. Lorsque le corrélateur asynchrone 16 trouve un en-tête, il déclenche le corrélateur synchrone 18 ; le corrélateur 18 étant réglé initialement pour effectuer un désétalement correspondant au code d'étalement appliqué à la partie du paquet qui suit immédiatement l'en-tête, peut alors, immédiatement, fournir un signal constitué de bits désétalés. Le circuit de démodulation 19 reçoit ce signal et le démodule pour le fournir au circuit de commande 20 qui, connaissant la structure du sous-paquet standard, peut déterminer, au fur et à mesure de l'arrivée des bits, à quel sous-paquet et à quel segment du sous-paquet considéré appartient un bit et donc quels sont le code et la fréquence d'étalement correspondants ; et ainsi le circuit 20 peut commander le corrélateur synchrone 18 pour que le code de désétalement utilisé à un moment donné dans ce corrélateur, corresponde au code d'étalement du signal sur son entrée reliée à la sortie du circuit 15.

Le circuit de commande 20 peut ainsi fournir des paquets désétalés à un circuit de traitement des paquets 22 et ce dernier circuit délivre les informations contenues dans les paquets à ou aux utilisateurs destinataires.

Le circuit de démodulation 19 est relié à une entrée du circuit de base de temps 17 pour synchroniser le circuit 17 sur les bits obtenus par démodulation dans le circuit 19.

Le circuit de commande 20 peut également avoir pour rôle de lire, dans le paquet, des informations telles que l'adresse de l'expéditeur ou du destinataire du paquet, afin par exemple d'arrêter la prise en compte d'un paquet qui n'est pas destiné au récepteur. Mais surtout le circuit de commande 20 joue un rôle important, et dont il n'a pas encore été question, relativement à la commande du synthétiseur variable 14. En effet, au fur et à mesure, qu'il repère un début de segment, il fournit au circuit de case de temps 17 une impulsion de début de segment pour que le circuit 17 puisse élaborer un signal de synchronisation de début de segment Si ; le signal Si est envoyé sur une entrée d'autorisation d'un générateur de tensions 21 dont la sortie fournit une tension de commande de la fréquence du synthétiseur variable 14 ; la valeur de cette tension de commande est fonction de la valeur d'un signal Sf fourni au générateur 21 par le circuit de commande 20. La valeur de Sf est modifiée par le circuit 20, au fur et à mesure de l'apparition des segments ; pour cela le circuit 20 choisit dans sa liste des fréquences celle qui correspond au segment reçu à un moment donné ; ainsi commandé, le synthétiseur variable 14 permet au mélangeur 12 d'assurer le désétalement en fréquence et, donc, de fournir le signal à fréquence intermédiaire constante appliqué à l'entrée du circuit de mise en forme 15.

La mise en oeuvre du procédé par rampe de fréquences, comme illustré sur le diagramme de la figure 3, et avec codes d'étalement, conduit à un schéma d'émetteur qui est aussi celui de la figure 5 ; mais le générateur de tensions 7 est commandé pour délivrer une rampe de tension et le signal C, fourni par le circuit 2 pour la commande des codages, est modifié quand la rampe passe par certaines valeurs prédéterminées, connues du circuit de commande 2. Et, lorsque le procédé est mis en oeuvre avec rampe de fréquences mais sans codes d'étalement, dans le schéma de l'émetteur la liaison qui fournit le signal C est supprimée.

De même la mise en oeuvre du procédé dans une réception avec rampe de fréquences et codes d'étalement conduit à un schéma qui est celui de la figure 6 ; mais le générateur de tension 21 est commandé pour délivrer une rampe de tension et le signal que fournit le circuit 20 au corrélateur 22 est modifié quand la rampe passe par les valeurs prédéterminées connues du circuit de commande 20. Et, lorsque le procédé est mis en oeuvre avec rampe de fréquences mais sans codes d'étalement, dans le schéma selon la figure 6 le corrélateur synchrone est supprimé et le signal de sortie du circuit de mise en forme 15 est appliqué d'une part au corrélateur asynchrone 16 et, d'autre part, directement au circuit de démodulation 19.

L'invention n'est pas limitée aux exemples décrits et concerne par exemple, le cas où le sous-paquet standard a ses caractéristiques qui varient avec le temps, soit de façon prédéterminée soit après échange d'informations entre les stations du réseau de communication.

## Revendications

1. Procédé de transmission de données par paquets, sur fréquence porteuse, avec étalement-désétalement des données entre plusieurs émetteurs et au moins un récepteur, **caractérisé**
■ **en ce qu'**il consiste à émettre des paquets de bits constitués :
- d'un en-tête (E ; E') à une fréquence prédéterminée,
- suivi de n sous-paquets (S1-S4 ; S1'-S3'), où n est un nombre réel supérieur à 1, fonction du paquet considéré, tous les sous-paquets ayant la même longueur, le même débit de transmission et la même loi d'étalement qu'un sous-paquet standard prédéterminé, formé de segments orthogonaux entre eux,
■ en ce qu'il consiste à émettre les sous-paquets d'un paquet en synchronisme avec l'émission de l'en-tête du paquet et avec une périodicité au moins égale à la durée du sous-paquet standard et
■ en ce qu'il consiste, à la réception,
- à avoir en mémoire la loi d'étalement du sous-paquet standard,
- à repérer les paquets en surveillant la seule réception des en-têtes,
- les sous-paquets d'un paquet repéré par son en-tête étant alors traités en fonction de la loi d'étalenent du sous-paquet standard pour en désétaler les données.

2. Procédé selon la revendication 1, **caractérisé en ce que** le sous-paquet standard est constitué de segments tous de même durée égale à celle de l'en-tête.

3. Procédé selon la revendication 1, **caractérisé en ce que** le sous-paquet standard est constitué de segments réduits à un bit et transmis selon au moins une rampe de fréquence.

4. Emetteur pour la mise en oeuvre du procédé selon l'une des revendications précédentes, **caractérisé en ce qu'**il comporte :
■ des moyens (1) permettant de former des paquets (S, S') à partir des données proprement dite (D),
■ des moyens de commande (2) ayant en mémoire la fréquence d'émission de l'en-tête (E, E'), la fréquence de répétition des sous-paquets (S1-S4 ; S1'-S3') et les caractéristiques d'étalement du sous-paquet standard afin de commander l'élaboration de l'étalement de tout paquet (S, S') à transmettre,
■ des moyens (9) permettant de synchroniser l'en-tête (E, E') et les sous-paquets (S1-S4 ; S1'-S3') d'un même paquet (S, S').

5. Récepteur pour la mise en oeuvre du procédé selon l'une des revendications 1 à 3, **caractérisé en ce qu'**il comporte :
■ des moyens de surveillance (16):
- pour repérer les en-têtes et
- pour déclencher (Sd) le processus de désétalement d'un paquet reçu quand son en-tête est repéré, et
■ des moyens de commande (20) ayant en mémoire la fréquence de répétition des sous-paquets et les caractéristiques d'étalement du paquet standard afin de commander le désétalement de tout paquet reçu en fonction des caractéristiques d'étalement du sous-paquet standard.

## Claims

1. Method of transmitting data in packets, on carrier frequency, with spreading/despreading of the data between several transmitters and at least one receiver, **characterized in that**
• it consists in transmitting packets of bits consisting of:
- a header (E; E') at a predetermined frequency,
- followed by n sub-packets (S1-S4; S1'-S3'), in which n is a real number greater than 1 and is a function of the packet considered, all the sub-packets having the same length, the same transmission bit rate and the same spreading law as a predetermined standard sub-packet formed by mutually orthogonal segments,
• it consists in transmitting the sub-packets of a packet in synchronism with the transmission of the header of the packet and with a periodicity at least equal to the duration of the standard sub-packet and
• it consists in, at reception,
- having in memory the spreading law of the standard sub-packet,
- identifying the packets by supervising only the reception of the headers,
- the sub-packets of a packet identified by its header being then processed as a function of the spreading law of the standard sub-packet so as to despread the data.

2. Method according to claim 1, **characterized in that** the standard sub-packet comprises segments that are all of the same duration as that of the header.

3. Method according to claim 1, **characterized in that** the standard sub-packet comprises segments reduced to one bit and transmitted according to at least one frequency ramp.

4. Transmitter for the implementation of the method according to one of the above claims, **characterized in that** it comprises:
• means (1) of forming packets (S, S') from the data themselves (D),
• means of control (2) having in memory the transmission frequency of the header (E, E'), the frequency of repetition of the sub-packets (S1-S4; S1'-S3') and the spread characteristics of the standard sub-packet in order to control activation of the spreading of any packet (S, S') to be transmitted,
• means (9) of synchronising the header (E, E') and the sub-packets (S1-S4; S1'-S3') of a given packet (S, S').

5. Receiver for the implementation of the method according to one of claims 1 to 3, **characterized in that** it comprises:
• means of supervision (16):
- to identify the headers, and
- to trigger (Sd) the process of despreading a packet received when its header is identified, and
• means of control (20) having in memory the frequency of repetition of the sub-packets and the spread characteristics of the standard packet in order to control the despreading of any packet received as a function of the spread characteristics of the standard sub-packet.

## Patentansprüche

1. Verfahren zur paketweisen Datenübertragung auf einer Trägerfrequenz, mit Fragmentierung und Wiederzusammensetzung der Daten zwischen mehreren Sendern und mindestens einem Empfänger, **dadurch gekennzeichnet,**
• **dass** es darin besteht, Bitpakete auszusenden, die bestehen aus:
- einem Vorspann (E; E') auf einer vorbestimmten Frequenz,
- gefolgt von n Unterpaketen (S1-S4; S1'-S3'), wobei n eine reelle Zahl größer als 1 ist, in Abhängigkeit von dem betrachteten Paket, wobei alle Unterpakete die gleiche Länge, die gleiche Übertragungsrate und das gleiche Fragmentierungsgesetz wie ein vorbestimmtes Standard-Unterpaket haben, das aus zueinander orthogonalen Segmenten gebildet wird,
• dass es darin besteht, die Unterpakete eines Pakets synchron mit der Aussendung des Vorspanns des Pakets und mit einer Periodizität mindestens gleich der Dauer des Standard-Unterpakets auszusenden, und
• dass es darin besteht, beim Empfang
- das Fragmentierungsgesetz des Standard-Unterpakets gespeichert zu haben,
- die Pakete zu erfassen, indem nur der Empfang der Vorspänne überwacht wird,
- wobei die Unterpakete eines durch seinen Vorspann erfassten Pakets dann in Abhängigkeit vom Fragmentierungsgesetz des Standard-Unterpakets verarbeitet werden, um ihre Daten wieder zusammenzusetzen.

2. Verfahren nach Anspruch 1, **dadurch gekennzeichnet, dass** das Standard-Unterpaket aus Segmenten besteht, die alle die gleiche Dauer wie der Vorspann aufweisen.

3. Verfahren nach Anspruch 1, **dadurch gekennzeichnet, dass** das Standard-Unterpaket aus auf ein Bit reduzierten und gemäß mindestens einer Frequenzrampe übertragenen Segmenten besteht.

4. Sender zur Anwendung des Verfahrens nach einem der vorhergehenden Ansprüche, **dadurch gekennzeichnet, dass** er aufweist:
• Mittel (1), die es ermöglichen, ausgehend von eigentlichen Daten (D) Pakete (S, S') zu formen,
• Steuermittel (2), in denen die Sendefrequenz des Vorspanns (E, E'), die Wiederholfrequenz der Unterpakete (S1-S4; S1'-S3') und die Fragmentierungseigenschaften des Standard-Unterpakets gespeichert sind, um die Ausarbeitung der Fragmentierung jedes zu übertragenden Pakets (S, S') zu steuern,
• Mittel (9), die es ermöglichen, den Vorspann (E, E') und die Unterpakete (S1-S4; S1'=S3') eines gleichen Pakets (S, S') zu synchronisieren.

5. Empfänger zur Anwendung des Verfahrens nach einem der Ansprüche 1 bis 3, **dadurch gekennzeichnet, dass** er aufweist:
• Überwachungsmittel (16):
- um die Vorspänne zu erfassen, und
- um den Prozess der Wiederzusammensetzung eines empfangenen Pakets einzuleiten (Sd), wenn sein Vorspann erfasst ist, und
• Steuermittel (20), in denen die Wiederholfrequenz der Unterpakete und die Fragmentierungseigenschaften des Standard-Pakets gespeichert sind, um die Wiederzusammensetzung jedes empfangenen Pakets in Abhängigkeit von den Fragmentierungseigenschaften des Standard-Unterpakets zu steuern.
